# EUROPÄISCHE PATENTSCHRIFT

(11) **EP 2 725 353 B1**
(45) Veröffentlichungstag und Bekanntmachung des Hinweises auf die Patenterteilung: **19.07.2017**
(21) Anmeldenummer: 12189788.8
(22) Anmeldetag: 24.10.2012
(51) Int. Cl.: G01N 29/11, G01N 29/12, G01N 29/34, G01F 1/66

(54) **Verfahren zur automatischen Betriebsfrequenz-Arbeitspunkteinstellung einer Ultraschall-Detektionsvorrichtung**
Method for automatic operating frequency work point adjustment of an ultrasound detection device
Procédé de réglage automatique du point de travail de fréquence d'exploitation d'un dispositif de détection à ultrasons

(43) Veröffentlichungstag der Anmeldung: 30.04.2014
(73) Patentinhaber: Elmos Semiconductor Aktiengesellschaft, 44227 Dortmund (DE)
(72) Erfinder: Devilée, Petrus Johannes, 44227 Dortmund (DE)
(74) Vertreter: dompatent von Kreisler Selting Werner - Partnerschaft von Patent- und Rechtsanwälten mbB

(56) Entgegenhaltungen:
- EP-A1- 0 935 258
- EP-A2- 1 443 007
- WO-A1-92/19988
- US-A1- 2008 173 100

## Beschreibung

Die Erfindung betrifft ein Verfahren zur automatischen Betriebsfrequenz-Arbeitspunkteinstellung bei einer Ultraschall-Detektionsvorrichtung, wobei die Ultraschall-Detektionsvorrichtung einen Ultraschallsender sowie einen Ultraschallempfänger und einen akustischen Übertragungskanal zwischen beiden aufweist.

Schwingende Systeme arbeiten im Regelfall am effektivsten, wenn sie bei ihrer Eigen- bzw. Resonanzfrequenz betrieben werden. Dabei stellt sich die Eigenfrequenz als resultierende Frequenz der typischerweise unterschiedlichen Eigenfrequenzen der Einzelkomponenten ein.

Insbesondere piezoelektrische Ultraschall-Detektionsvorrichtungen, die kontinuierlich betrieben werden, sollten so nahe wie möglich an der Eigen- bzw. Resonanzfrequenz des Ultraschall-(Gesamt-)systems betrieben werden. Kontinuierlich arbeitende Ultraschallsysteme finden beispielsweise in der Raumüberwachung Anwendung. Die hohe Genauigkeit der Einhaltung der Eigenfrequenz kann nur schwerlich ohne zusätzliche Maßnahmen, d.h. durch "on-Chip"-Maßnahmen erzielt werden. Darüber hinaus ist zu beachten, dass die Resonanzfrequenz eines Transducer-Systems über die Lebensdauer und in Abhängigkeit von der Temperatur schwankt. Dies bedeutet, dass man bei dem Design des Systems gewisse Kompromisse eingehen muss, da die Abweichung der eingestellten Betriebsfrequenz von der Resonanz- bzw. Eigenfrequenz des Systems unbekannt ist.

Die automatische Betriebsfrequenz-Arbeitspunkteinstellung einer Ultraschall-Detektionsvorrichtung ist für unterschiedliche Fälle der Untersuchung von Gegenständen mit Ultraschall aus EP-A-1 443 007, EP-A-0 935 258, WO-A-92/19988 und US-A-2008/0173100 bekannt.

Aufgabe der Erfindung ist es, ein Verfahren zur automatischen Betriebsfrequenz-Arbeitspunkteinstellung für eine Ultraschall-Detektionsvorrichtung zu schaffen, so dass sich diese automatisch auf ihre Resonanzfrequenz einstellt.

Zur Lösung dieser Aufgabe wird mit der Erfindung ein Verfahren nach Anspruch 1 zur automatischen Betriebsfrequenz-Arbeitspunkteinstellung einer Ultraschall-Detektionsvorrichtung, die einen Ultraschallsender sowie einen Ultraschallempfänger und einen akustischen Übertragungskanal zwischen beiden aufweist, vorgeschlagen. Einzelne Ausgestaltungen des Verfahrens sind Gegenstand der Unteransprüche.

Nach der Erfindung ist also vorgesehen, dass die Veränderung der Ansteuerfrequenz betragsmäßig umso größer ist, je größer die vorherige Veränderung der Empfangssignalstärke war. Damit ist also nicht nur das Vorzeichen der Ansteuerfrequenzveränderung von dem Veränderungsverhalten der Empfangssignalstärke in der Vergangenheit sondern auch das Ausmaß der Ansteuerfrequenzänderung von dem Grad einer vorherigen Veränderung der Empfangssignalstärke abhängig.

Wesensmerkmal der Erfindung ist es, die Ansteuerfrequenz des Ultraschallsensors (kontinuierlich bzw. in vorgegebenen Schritten) immer wieder zu verändern. Dabei bestimmt sich die Richtung, in der die Ansteuerfrequenz verändert wird (also ob die Ansteuerfrequenz zu größeren oder zu kleineren Werten hin verändert wird), aus der Veränderung der Empfangssignalstärke am Ultraschallempfänger. Wird also bei beispielsweise einer Vergrößerung der Ansteuerfrequenz das Empfangssignal schwächer, so wird die Ansteuerfrequenz im nächsten Veränderungsschritt verringert, und zwar unter der Annahme, dass sich dann die Empfangssignalstärke vergrößern wird. Auf diese Art und Weise nähert man sich einem Maximum der Empfangssignalstärke an, was dann dafür repräsentativ ist, dass das Ultraschallsystem bei seiner Resonanzfrequenz arbeitet.

Es wird ein amplitudenbasierter Regelkreis vorgeschlagen; die gemessene Amplitude an dem Ultraschallempfänger wird mit dem bzw. den vorherigen Wert(en) verglichen, und der Gradient dieser Messwerte wird dann verwendet, um die korrekte Ansteuerfrequenz zu berechnen. Es handelt sich hier um einen langsamen Regelkreis, der außerhalb der inneren Verarbeitungsschleife arbeitet - die Annahme ist hier, dass langsame Veränderungen in der Ansteuerfrequenz nicht mit dem Sensiersystem als solchem interferieren. Die Zeitsteuerungs-Ungewissheit (= Jitter) und die Amplituden-Ungewissheit (Quantisierungsrauschen) führen zu geringfügigen Veränderungen der Ansteuerfrequenz, selbst wenn ein lokales Amplitudenmaximum erreicht wird (= kontinuierliches Suchverhalten). Dies bedeutet, dass eine (thermische oder anderweitige) Langzeitdrift durch das erfindungsgemäße Selbsttuningsystem verfolgt wird und ein bekanntes Delta zwischen der Ansteuerfrequenz und der Systemresonanzfrequenz existiert. Ausgehend vom Kaltstart des Chips sollte ein Frequenz-Sweep ausgeführt werden, um den Betriebsfrequenzbereich derart zu definieren, dass das lokale Maximum gleich dem globalen Maximum wird.

Zweckmäßigerweise wird derart verfahren, dass die potentielle Veränderung der Ansteuerfrequenz des Ultraschallsenders von Intervall zu Intervall erfolgt, wobei aufeinanderfolgende Intervalle unterschiedliche oder gleiche Längen aufweisen.

In weiterer vorteilhafter Ausgestaltung der Erfindung können auch Störungen der Übertragungsstrecke detektiert werden. Hierzu ist gemäß einem Aspekt der Erfindung vorgesehen, dass dass der Betrag der Veränderung der Empfangssignalstärke von Intervall zu Intervall und/oder innerhalb eines Intervalls mit einem Schwellwert verglichen wird und dass eine Fehlermeldung (d.h., dass der akustische Übertragungskanal verändert bzw. gestört ist) ausgegeben wird, wenn der Betrag der Veränderung der Empfangssignalstärke den Schwellwert überschreitet oder unterschreitet. Beide Fälle, nämlich eine plötzliche Empfangssignalstärkevergrößerung bzw. -verringerung können für eine Störung des Übertragungskanals sprechen, was somit beispielsweise mit Hilfe eines Fensterdiskriminators, mit dem die Empfangssignalstärke verglichen wird, erkannt werden kann.

In weiterer vorteilhafter Ausgestaltung der Erfindung kann vorgesehen sein, dass die Fehlermeldung dann ausgegeben wird, wenn die Veränderung der Empfangssignalstärke ein vorgebbares der beiden Vorzeichen aufweist. Wenn beispielsweise die Empfangssignalstärke plötzlich kleiner wird, so lässt dies auf einen Fehler in dem Übertragungskanal schließen.

Um das Verhalten der Ultraschall-Detektionsvorrichtung über einen angenommenen Betriebsfrequenzbereich messtechnisch erfassen zu können, damit in der Folge mit einer Ansteuerfrequenz begonnen werden kann, die bereits im Bereich der erwarteten Resonanzfrequenz liegt, ist es von Vorteil, wenn die Ansteuerfrequenz über mehrere Intervalle hinweg innerhalb eines vorgebbaren, erwarteten Betriebsfrequenzbereichs verändert wird, und zwar unter Beibehaltung ein und desselben Veränderungsvorzeichens, dass anhand der Empfangssignalstärke, die bei den jeweils eingestellten Ansteuerfrequenzen ermittelt worden sind, diejenige Ansteuerfrequenz oder diejenige Gruppe von Ansteuerfrequenzen ermittelt wird, bei der die Empfangssignalstärke am größten ist bzw. bei denen die Empfangssignalstärken zu der Gruppe der größten Empfangssignalstärken gehören, wobei zur automatischen Betriebsfrequenz-Arbeitspunkteinstellung mit der Ansteuerung des Ultraschallsenders bei der besagten Ansteuerfrequenz bzw. bei einer der Ansteuerfrequenzen der besagten Gruppe von Ansteuerfrequenzen begonnen wird.

Grundsätzlich gilt, dass es von Vorteil ist, wenn die automatische Betriebsfrequenz-Arbeitspunkteinstellung bei einer Ansteuerfrequenz initiiert wird, die gleich der Resonanzfrequenz einer der Komponenten ist. Beispielsweise könnte man also mit der Resonanzfrequenz des Ultraschallempfängers als Anfangs-Ansteuerfrequenz des Ultraschallsenders arbeiten. Ebenso ist es aber auch möglich, als erste Ansteuerfrequenz zur Betriebsfrequenz-Arbeitspunkteinstellung der Ultraschall-Detektionsvorrichtung die Resonanzfrequenz des Ultraschallsenders zu wählen.

Das erfindungsgemäße Verfahren lässt sich überall dort einsetzen, wo Ultraschallsysteme kontinuierlich oder intermittierend betrieben werden, also kontinuierlich Ultraschallsignale oder alternierend Burstsignale, d. h. Ultraschall-Pulsgruppen aussenden oder empfangen. Im letztgenannten Fall kann ein Ultraschall-Transducer, d. h. eine Einheit eingesetzt werden, die wechselweise als Sender oder als Empfänger arbeitet. Als Beispiel sei hier die Überwachung der Übertragungsstrecke bezüglich des nicht erwarteten Vorhandenseins eines Körpers oder des erwarteten Nichtvorhandenseins eines Körpers. Im erstgenannten Fall handelt es sich um Systeme zur Raumüberwachung. Andere Anwendungsfälle sind beispielsweise die Detektion von Körpern wie beispielsweise die Detektion einer Vorrichtung bzw. eines innerhalb einer Vorrichtung zuzuführenden Gegenstandes wie beispielsweise eines Blattes, wobei dann, wenn mehr als ein Blatt transportiert wird, ein Fehlerfall angezeigt wird.

Die Erfindung wird nachfolgend anhand der Zeichnung näher erläutert. Im Einzelnen zeigen dabei:
- Fig. 1: die Abhängigkeit der Empfangssignalstärke in einem Ultraschallsystem von der Ansteuerfrequenz,
- Fig. 2: ein Diagramm der Abhängigkeit der Empfangssignalstärke von der Differenz der Eigenfrequenzen von Sender und Empfänger und
- Fign. 3 bis 5: schematisch die die Vorgehensweise zum Herantasten an die Eigenfrequenz des Ultraschallsystems.

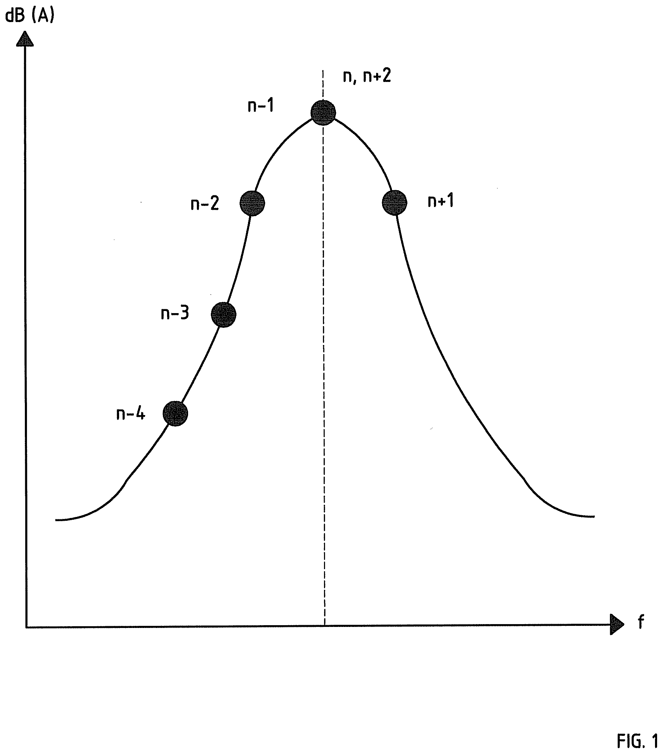

Fig. 1 zeigt exemplarisch den Verlauf der Empfangssignalstärke eines Ultraschallsystems in Abhängigkeit von der Betriebsfrequenz. Dabei weist das Ultraschallsystem bzw. die Ultraschall-Detektionsvorrichtung einen Ultraschallsender und einen Ultraschallempfänger sowie eine Übertragungsstrecke bzw. einen akustischen Übertragungskanal zwischen beiden auf.

Die Stärke des vom Ultraschallempfänger empfangenen Signals ändert sich in Abhängigkeit von der Ansteuerfrequenz des Ultraschallsenders. Die Empfangssignalstärke ist am größten bei Betrieb der Ultraschall-Detektionsvorrichtung bei deren Eigen- bzw. Resonanzfrequenz. Diese Eigenfrequenz stellt sich als Resultierende aus den Eigen- bzw. Resonanzfrequenzen des Ultraschallsenders und des Ultraschallempfängers dar.

In Fig. 1 sind mit n-4, n-3, n-2, n-1, n, n+1 und n+2 Zeitpunkte repräsentiert, zu denen die Ansteuerfrequenz des Ultraschallsenders jeweils einen gegenüber dem vorherigen Wert verschiedenen Wert annimmt. Es sei angenommen, dass ausgehend vom Zeitpunkt n-4 bis zum Zeitpunkt n die Ansteuerfrequenz von Intervall zu Intervall vergrößert wird, da auch die Empfangssignalstärke sich jeweils vergrößert. Zum Zeitpunkt n-1 bzw. n ist das Maximum der Empfangssignalstärke erreicht; die Ansteuerfrequenz entspricht also der Eigenfrequenz der Ultraschall-Detektionsvorrichtung. Zum nächsten Zeitpunkt n+1 wird wiederum die Frequenz erhöht; denn ohne Rückmeldung der Empfangssignalstärke bei der zum Zeitpunkt n+1 gewählten Ansteuerfrequenz ist noch nicht bekannt, dass der Bereich maximaler Empfangssignalstärke nun überschritten ist. Auf Grund der bei der Ansteuerfrequenz zum Zeitpunkt n+1 gegebenen, gegenüber der zuvor eingestellten Ansteuerfrequenz reduzierten Empfangssignalstärke wird nun für den Zeitpunkt n+2 eine verringerte Ansteuerfrequenz verwendet, was dazu führt, dass die Ansteuerfrequenz des Systems sich wieder der Eigenfrequenz des Systems annähert.

Die Veränderung der Ansteuerfrequenz wird fortlaufend durchgeführt, so dass jederzeit die Betriebsfrequenz auf der Eigenfrequenz gehalten werden kann, und zwar auch dann, wenn sich diese alterungsbedingt bzw. bedingt durch die Temperatur oder andere Einflüsse ändert.

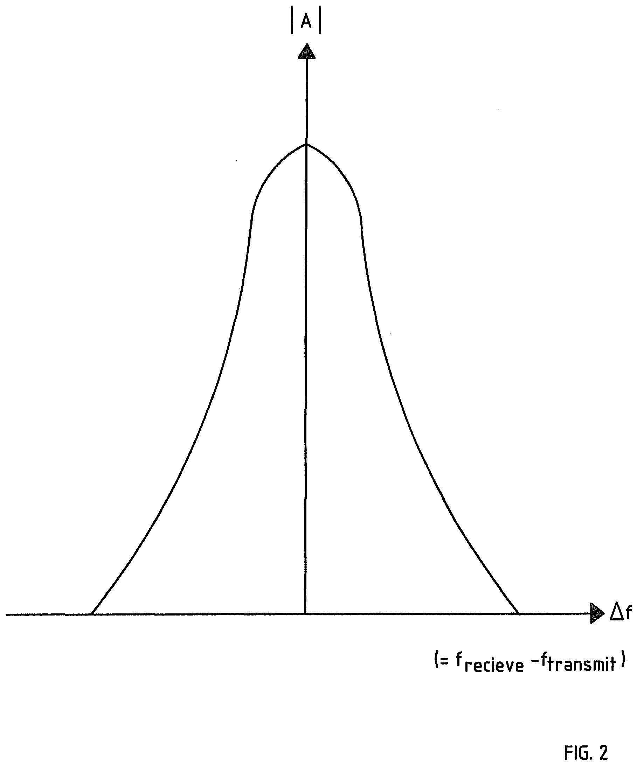

Anhand der Fign. 2 bis 5 wird nochmals deutlich, wie nach dem erfindungsgemäßen Verfahren vorgegangen wird, um eine Ultraschall-Detektionsvorrichtung möglichst nahe ihrer Eigenfrequenz zu betreiben und um vom Start des Betriebs der Ultraschall-Detektionsvorrichtung ausgehend sich der Eigenfrequenz der Vorrichtung anzunähern. Dabei zeigt Fig. 2 die Abhängigkeit der Empfangssignalstärke von der Differenz der Eigenfrequenzen des Ultraschallsenders und des Ultraschallempfängers.

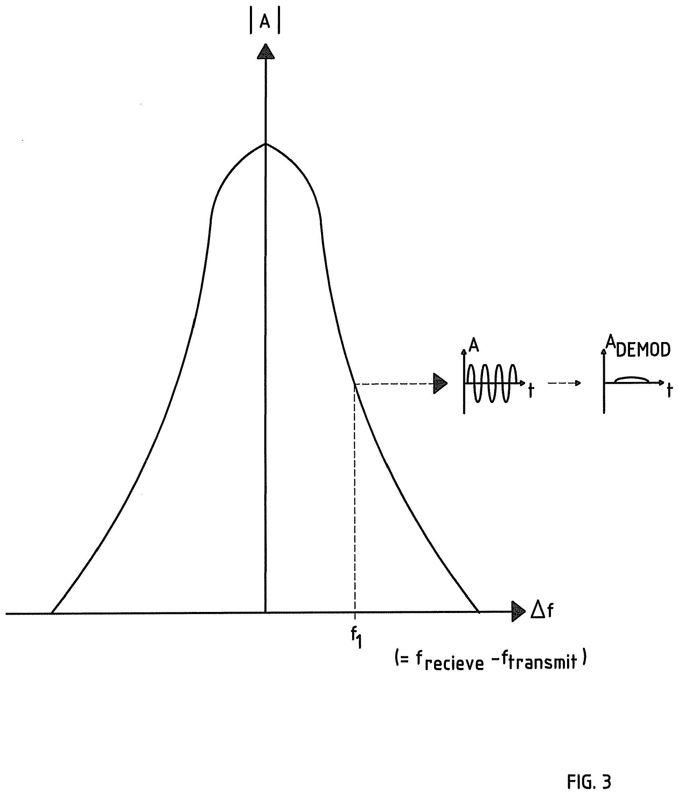

Gemäß Fig. 3 wird mit der Frequenz f₁ begonnen, wobei hier beispielhaft die Resonanzfrequenz des Ultraschallempfängers gewählt wird. Es stellt sich eine Empfangssignalstärke ein, die messtechnisch erfasst wird und die letztendlich zu einer Empfangssignalstärke des demodulierten Signals führt.

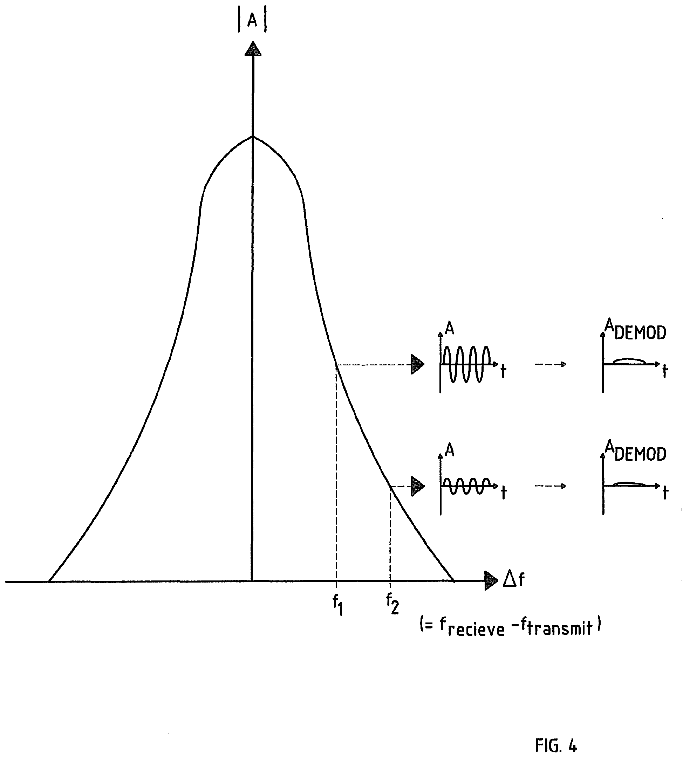

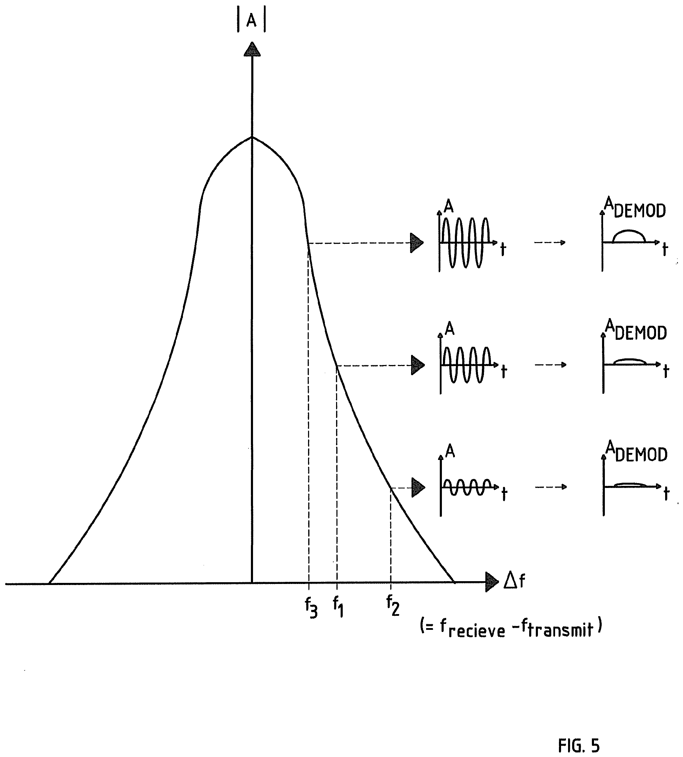

Im nächsten Schritt (siehe Fig. 4) wird die Ansteuerfrequenz in Richtung f₂ verändert, was in diesem Ausführungsbeispiel zu einer gegenüber der Frequenz f₁ verringerten Empfangssignalstärke führt. Dies zeigt, dass die Richtung, in der die Ansteuerfrequenz verändert wurde, nämlich zu größeren Frequenzen hin, falsch gewählt war. Deshalb wird im nächsten Schritt (siehe Fig. 5) die Frequenz zu kleineren Werten hin, nämlich bei f₃, gewählt. Jetzt ist die Empfangssignalstärke vergrößert, was ein Hinweis dafür ist, die Ansteuerfrequenz in der richtigen Weise geändert zu haben. Unter Verwendung mehrerer weiterer schrittweise Veränderungen der Ansteuerfrequenz nähert man sich dem Maximum der Empfangssignalstärke an.

## Patentansprüche

1. Verfahren zur automatischen Betriebsfrequenz-Arbeitspunkteinstellung einer Ultraschall-Detektionsvorrichtung, die einen Ultraschallsender sowie einen Ultraschallempfänger und einen akustischen Übertragungskanal zwischen beiden aufweist, wobei bei dem Verfahren
- die Ansteuerfrequenz des Ultraschallsenders in Intervallen verändert wird, wobei die Ansteuerfrequenz während eines der Vielzahl von Intervallen einen Wert und in einem auf dieses Intervall folgenden Intervall einen von dem Wert verschiedenen anderen Wert aufweist,
- die Stärke des von dem Ultraschallempfänger empfangenen Signals ermittelt wird, wobei Veränderungen der Empfangssignalstärke nach Betrag und Vorzeichen durch Vergleich der in einem Intervall ermittelten Empfangssignalstärke mit der in einem nachfolgenden Intervall ermittelten Empfangssignalstärke detektiert werden,
- die Ansteuerfrequenz des Ultraschallsenders für ein Intervall in Abhängigkeit von einer zeitlich vor diesem Intervall erfolgten Veränderung der Empfangssignalstärke verändert wird, wobei die Veränderung der Ansteuerfrequenz mit dem gleichen Vorzeichen erfolgt, mit dem sich die Empfangssignalstärke verändert hat, und
- die Ansteuerfrequenz solange verändert wird, bis die Empfangssignalstärke ein Maximum erreicht hat, oder die Ansteuerfrequenz in zeitlich hintereinanderliegenden Intervallen mit alternierendem Vorzeichen verändert wird, wenn die Empfangssignalstärke im Wesentlichen unverändert bleibt oder sich die Empfangssignalstärke ebenfalls mit alternierendem Vorzeichen verändert, womit der Arbeitspunkt der Betriebsfrequenz der Ultraschall-Detektionsvorrichtung eingestellt ist, wobei der Grad einer Veränderung der Ansteuerfrequenz des Ultraschallsenders proportional zum Grad der vorherigen Veränderung der Empfangssignalstärke gewählt wird.

2. Verfahren nach Anspruch 1, **dadurch gekennzeichnet, dass** die potentielle Veränderung der Ansteuerfrequenz des Ultraschallsenders von Intervall zu Intervall erfolgt, wobei aufeinanderfolgende Intervalle unterschiedliche oder gleiche Längen aufweisen.

3. Verfahren nach Anspruch 1 oder 2, **dadurch gekennzeichnet, dass** der Betrag der Veränderung der Empfangssignalstärke von Intervall zu Intervall und/oder innerhalb eines Intervalls mit einem Schwellwert verglichen wird und dass eine Fehlermeldung ausgegeben wird, wenn der Betrag der Veränderung der Empfangssignalstärke den Schwellwert über- oder unterschreitet.

4. Verfahren nach Anspruch 3, **dadurch gekennzeichnet, dass** die Fehlermeldung dann ausgegeben wird, wenn die Veränderung der Empfangssignalstärke ein vorgebbares der beiden Vorzeichen aufweist.

5. Verfahren nach einem der Ansprüche 1 bis 4, **dadurch gekennzeichnet, dass** die Ansteuerfrequenz über mehrere Intervalle hinweg innerhalb eines vorgebbaren, erwarteten Betriebsfrequenzbereichs verändert wird, und zwar unter Beibehaltung ein und desselben Veränderungsvorzeichens, dass anhand der Empfangssignalstärke, die bei den jeweils eingestellten Ansteuerfrequenzen ermittelt worden sind, diejenige Ansteuerfrequenz oder diejenige Gruppe von Ansteuerfrequenzen ermittelt wird, bei der die Empfangssignalstärke am größten ist bzw. bei denen die Empfangssignalstärken zu der Gruppe der größten Empfangssignalstärken gehören, und dass zur automatischen Betriebsfrequenz-Arbeitspunkteinstellung mit der Ansteuerung des Ultraschallsenders bei der besagten Ansteuerfrequenz bzw. bei einer der Ansteuerfrequenzen der besagten Gruppe von Ansteuerfrequenzen begonnen wird.

6. Verfahren nach einem der Ansprüche 1 bis 5, **dadurch gekennzeichnet, dass** die Ultraschall-Detektionsvorrichtung kontinuierlich oder intermittierend betrieben wird.

7. Verfahren nach einem der Ansprüche 1 bis 6, **dadurch gekennzeichnet, dass** als Ultraschallsender und als Ultraschallempfänger ein Ultraschall-Transducer in Form einer wechselweise Ultraschallwellen aussendenden und diese Ultraschallwellen nach einer Reflektion empfangenden Ultraschallsende- und -empfangseinheit verwendet wird.

8. Verwendung des Verfahrens nach einem der vorhergehenden Ansprüche zur Detektion der Übertragungsstrecke bezüglich des nicht erwarteten Vorhandenseins oder des erwarteten Nichtvorhandenseins eines Körpers.

## Claims

1. A method for the automatic adjustment of the operating-frequency operating point of an ultrasonic detection device comprising an ultrasonic transmitter and an ultrasonic receiver and an acoustic transmission channel therebetween, wherein, in said method,
- the driving frequency of the ultrasonic transmitter is changed at intervals, wherein the driving frequency during any one of the plurality of intervals has a value and in an interval following said interval has another value differing from said value,
- the strength of the signal received by the ultrasonic receiver is determined, wherein changes in the strength of the received signal are detected in magnitude and sign by comparing the strength of the received signal determined in an interval to the strength of the received signal determined in a subsequent interval,
- the driving frequency of the ultrasonic transmitter is varied for an interval in dependence on a change of the strength of the received signal that occurred temporally before this interval, wherein the variation of the driving frequency is performed with the same sign with which the strength of the received signal has changed, and
- the driving frequency is varied until the strength of the received signal has reached a maximum or the driving frequency is varied in temporally successive intervals with alternating sign if the strength of the received signal remains essentially unchanged or the strength of the received signal also varies with alternating sign, whereby the operating point of the operating frequency of the ultrasonic detection device is set,
- wherein the degree of a change in the driving frequency of the ultrasonic transmitter is selected to be proportional to the degree of the previous change in the strength of the received signal.

2. The method of claim 1, **characterized in that** the potential change of the driving frequency of the ultrasonic transmitter is performed from interval to interval, wherein successive intervals have different or equal lengths.

3. The method according to claim 1 or 2, **characterized in that** the amount of change of the strength of the received signal is compared to a threshold value from interval to interval and/or within an interval, and that an error message is output when the amount of change of the strength of the received signal rises above or falls below the threshold value.

4. The method according to claim 3, **characterized in that** the error message is output if the change of the strength of the received signal has a predeterminable sign of the two signs.

5. The method according to one of claims 1 to 4, **characterized in that** the driving frequency is varied over a plurality of intervals within a specifiable, expected operating frequency range, while maintaining one and the same change sign, that, on the basis of the strength of the received signal which has been determined at the respectively set driving frequencies, the driving frequency or the group of driving frequencies is determined at which the strength of the received signal is highest and, respectively, at which the strengths of the received signal belong to the group of the highest strengths of the received signal, and that, for automatically setting the operating-frequency operating point, there is started the control of the ultrasonic transmitter at said driving frequency and respectively at one of the driving frequencies of said group of driving frequencies.

6. The method according to one of claims 1 to 5, **characterized in that** the ultrasonic detection device is operated continuously or intermittently.

7. Method according to one of claims 1 to 6, **characterized in that**, as an ultrasonic transmitter and as an ultrasonic receiver, use is made of an ultrasonic transducer in the form of an ultrasonic transmitting and receiving unit alternately emitting ultrasonic waves and receiving these ultrasonic waves after reflection.

8. Use of the method according to any one of the preceding claims for the detection of the transmission path with respect to a non-expected presence or an expected absence of a body.

## Revendications

1. Procédé de réglage automatique du point de travail de fréquence d'exploitation d'un dispositif de détection à ultrasons qui comprend un émetteur à ultrasons ainsi qu'un récepteur à ultrasons et un canal de transmission acoustique entre les deux, dans ce procédé
- la fréquence de commande de l'émetteur à ultrasons étant changée en des intervalles, la fréquence de commande présentant une valeur pendant un de la multitude d'intervalles et une autre valeur, différente de la valeur, dans un intervalle suivant cet intervalle,
- la puissance du signal reçu par le récepteur à ultrasons étant déterminée, des changements de la puissance du signal de réception étant détectées en valeur absolue et signe par comparaison de la puissance du signal de réception déterminée dans un intervalle avec la puissance du signal de réception déterminée dans un intervalle suivant,
- la fréquence de commande de l'émetteur à ultrasons étant changée pour un intervalle en fonction d'un changement de la puissance du signal de réception survenue pendant le temps antérieur à cet intervalle, le changement de la fréquence de commande étant effectuée avec le même signe avec lequel la puissance du signal de réception a changé et
- la fréquence de commande étant changée jusqu'à ce que la puissance du signal de réception ait atteint un maximum ou la fréquence de commande étant changée dans des intervalles se succédant dans le temps avec un signe alternant lorsque la puissance du signal de réception reste sensiblement inchangée ou que la puissance du signal de réception change également avec un signe alternant, ce par quoi le point de travail de fréquence d'exploitation du dispositif de détection à ultrasons est réglé,
- le degré d'un changement de la fréquence de commande de l'émetteur à ultrasons étant choisi proportionnellement par rapport au degré du changement précédant de la puissance du signal de réception.

2. Procédé selon la revendication 1, **caractérisé en ce que** le changement potentiel de la fréquence de commande de l'émetteur à ultrasons est effectué d'intervalle en intervalle, des intervalles successifs ayant des longueurs différentes ou égales.

3. Procédé selon la revendication 1 ou 2, **caractérisé en ce que** la valeur absolue du changement de la puissance du signal de réception est comparée d'intervalle en intervalle et/ou à l'intérieur d'un intervalle à une valeur seuil et **en ce qu'**un message d'erreur est émis lorsque la valeur absolue du changement de la puissance du signal de réception passe au-dessus ou en-dessous de la valeur de seuil.

4. Procédé selon la revendication 3, **caractérisé en ce que** le message d'erreur est émis lorsque le changement de la puissance du signal de réception présente un signe susceptible d'être prédéterminé parmi les deux signes.

5. Procédé selon l'une des revendications 1 à 4, **caractérisé en ce que** la fréquence de commande est changée sur plusieurs intervalles dans une plage de fréquences d'exploitation attendues susceptibles d'être prédéterminées, et cela en maintenant le même signe de changement, **en ce que**, sur la base des puissances du signal de réception qui ont été déterminées aux fréquences de commande respectivement réglées, il est déterminé la fréquence de commande ou le groupe de fréquences de commande, à laquelle la puissance du signal de réception est la plus grande ou auquel les puissances des signaux de réception font partie du groupe des puissances des signaux de réception les plus grandes, et **en ce que**, pour un réglage automatique du point de travail de fréquence d'exploitation, il est commencé avec la commande de l'émetteur à ultrasons à ladite fréquence de commande ou à une des fréquences de commande dudit groupe de fréquences de commande.

6. Procédé selon l'une des revendications 1 à 5, **caractérisé en ce que** le dispositif de détection à ultrasons est fait fonctionner de manière continue ou de façon intermittente.

7. Procédé selon l'une des revendications 1 à 6, **caractérisé en ce qu'**il est utilisé comme émetteur à ultrasons ou comme récepteur à ultrasons, un transducteur à ultrasons sous la forme d'une unité d'émission et de réception d'ultrasons qui, en alternance, émet des ondes d'ultrasons et, après réflexion, reçoit ces ondes d'ultrasons.

8. Utilisation du procédé selon l'une des revendications précédentes pour la détection du trajet de transmission relatif à la présence non attendue ou l'absence attendue d'un corps.
